# EUROPÄISCHE PATENTSCHRIFT

(11) **EP 2 335 091 B1**
(45) Veröffentlichungstag und Bekanntmachung des Hinweises auf die Patenterteilung: **30.07.2014**
(21) Anmeldenummer: 09781575.7
(22) Anmeldetag: 06.08.2009
(51) Int. Cl.: G01S 7/527, G01S 15/93, G01S 7/526

(54) **ULTRASCHALLSENSOR UND VERFAHREN ZUM BETREIBEN EINES ULTRASCHALLSENSORS**
ULTRASONIC SENSOR AND METHOD FOR OPERATING AN ULTRASONIC SENSOR
DÉTECTEUR À ULTRASONS ET PROCÉDÉ DE FONCTIONNEMENT D UN DÉTECTEUR À ULTRASONS

(30) Priorität: 09.09.2008 DE 102008041894
(43) Veröffentlichungstag der Anmeldung: 22.06.2011
(73) Patentinhaber: Robert Bosch GmbH, 70442 Stuttgart (DE)
(72) Erfinder: REICHE, Martin, 71263 Weil Der Stadt (DE)
(86) Internationale Anmeldenummer: PCT/EP2009/060231
(87) Internationale Veröffentlichungsnummer: WO 2010/028919

(56) Entgegenhaltungen:
- EP-A2- 1 293 803
- DE-A1- 19 803 660
- US-A- 4 626 855
- US-A- 5 121 364

## Beschreibung

### STAND DER TECHNIK

Die vorliegende Erfindung betrifft einen Ultraschallsensor für eine Einparkhilfe und ein Verfahren zum Betreiben eines Ultraschallsensors für eine Einparkhilfe.

Ultraschallsensoren weisen einen Empfangsfilter auf, der zum Unterdrücken von Störsignalen dient. Das Empfangsfilter führt systembedingt zu einer Verzerrung von Signalen, die eine Trennschärfe einer Entfernungsbestimmung begrenzen.

Aus der DE 34 11 135 A1 ist bereits ein azimutanpassbares, phasengesteuertes Sonar bekannt.

Aus US 5 121 364 A ist ein bildgebendes Verfahren auf Ultraschallbasis bekannt, bei dem eine Filterung eines synchron demodulierten Empfangssignals durchgeführt wird. Es werden ein Hochpass- und ein Tiefpassfilter auf dem demodulierten Signalkanälen I und Q verwendet, um im Nahbereich eine geringe Dispersion zu erzielen, wodurch sich die Auflösung erhöht und im Fernbereich einen optimales SNR (entsprechend einer höheren Reichweite) zu erzielen.

### OFFENBARUNG DER ERFINDUNG

Das erfindungsgemäße Verfahren zum Betreiben eines Ultraschallsensors für eine Einparkhilfe sieht folgende Schritte vor:

Umschalten eines Empfangsfilters auf eine erste Bandbreite zum Erfassen von reflektierten Ultraschallsignalen an nahen Objekten und Umschalten des Empfangsfilters auf eine zweite Bandbreite zum Erfassen von reflektierten Ultraschallsignalen an entfernten Objekten, wobei die erste Bandbreite größer als die zweite Bandbreite ist.

Eine hochaufgelöste Entfernungsbestimmung naher Objekte kann durch geringere Verzerrungen der Signale aufgrund der größeren Bandbreite des Empfangsfilters erreicht werden. Diese ist insbesondere bei Einparkhilfen von Bedeutung.

Der erfindungsgemäße Ultraschallsensor mit einem umschaltbaren Empfangsfilter weist für einen Nahmessbereich des Ultraschallsensors eine erste Bandbreite und für einen Femmessbereich des Ultraschallsensors eine zweite Bandbreite auf, wobei die erste Bandbreite größer als die zweite Bandbreite ist.

### KURZE BESCHREIBUNG DER ZEICHNUNGEN

Die vorliegende Erfindung wird nachfolgend anhand bevorzugter Ausführungsformen und beigefügte Figuren erläutert. In den Figuren zeigen:
- Fig. 1: eine Ausführungsfonl1 eines Ultraschallsensors und
- Fig. 2: ein Flussdiagramm eines Verfahrens zum Betreiben eines Ultraschallwandlers.

### AUSFÜHRUNGSFORMEN DER ERFINDUNG

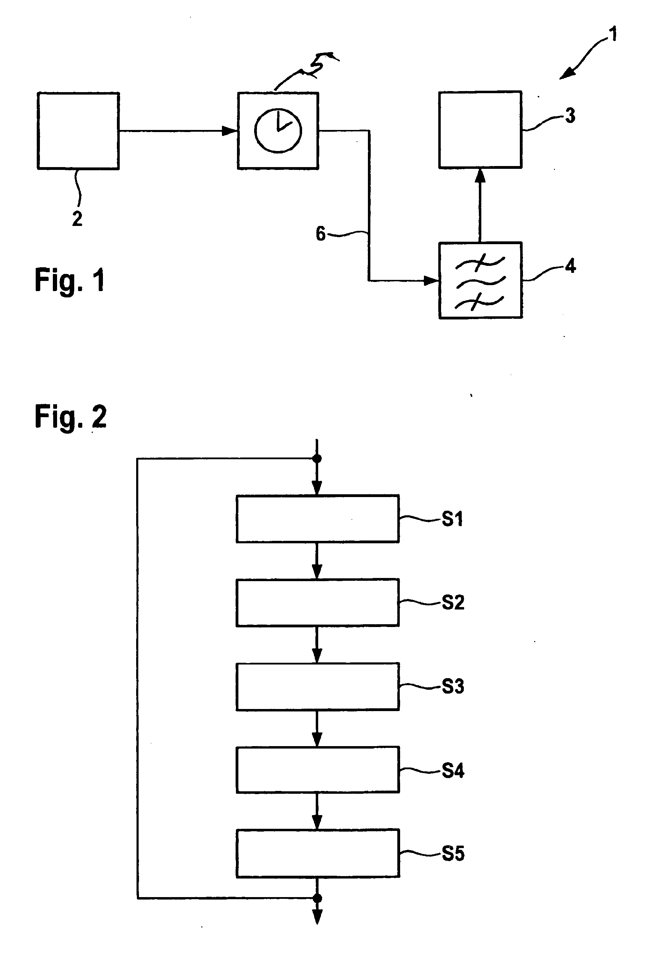

In Figur 1 ist ein Blockdiagramm eines Ultraschallwandlers 1 gezeigt. Der Ultraschallwandler 1 weist eine Sendeeinrichtung 2 mit einem Ultraschallwandler auf, die Ultraschallpulse erzeugen kann. Die Ultraschallpulse können eine Dauer im Bereich von 100 µs bis 500 µs, z.B. 300 µs auf. Die Trägerfrequenz kann im Bereich von 25 kHz bis 100 kHz, z.B. bei 50 kHz liegen.

Die Ultraschallpulse werden an Objekten reflektiert. Die reflektierten Anteile werden von einer Empfangseinrichtung 3 detektiert, die den selben Ultraschallwandler verwendet wie die Sendeeinrichtung 2.

Die reflektierten Anteile weisen eine um mehr als 100 dB gedämpfte Signalstärke gegenüber den ausgesendeten Ultraschallpulsen auf. Der Empfangseinrichtung 3 ist daher ein Bandpassfilter als Empfangsfilter 4 nachgeschaltet, welcher dazu dient Störsignale anderer Signalquellen außerhalb des Nutzbandes des Empfangssignals auszublenden. Die Störquellen können der Motor, die Zündkerzen, andere Ultraschallsender sein. Zudem ist darauf zu achten, dass das Sendeanregungssignal auf einen Pegel abgefallen ist, der kleiner ist, als zu erwartende Empfangssignale, z.B. um 100 dB abgefallen ist.

Die Bandbreite des Empfangsfilters 4 ist so ausgelegt, dass für entfernte Objekte eine möglichst schmalbandige Selektion von Signalen erreicht wird. Hierfür eignet sich eine Bandbreite im Bereich von 5 kHz bis 10 kHz, z.B. 8 kHz. Hierbei wird angenommen, dass das Sendeanregungssignal um 100 dB abgeklungen ist und der Ultraschallwandler bereits ausgeschwungen ist, wenn Echos eintreffen.

Der Ultraschallsensor 1 sieht vor, die Bandbreite zum Erfassen naher Objekt umzuschalten. Der Nahbereich kann z.B. Objekte im Radius von 30 cm umfassen. Im Nahbereich befinden sich typischerweise Objekte, die beim Einparken eines Fahrzeuges relevant sind. Eine größere Bandbreite des Empfangsfilters 4 führt zu geringeren Phasenverzerrungen der Signale.

Hierdurch wird auch die Verzerrung der Phase des Ausschwingsignals reduziert. Schwebungen des Ausschwingsignals aufgrund des nichtlinearen Phasengangs des Empfangsfilters 4 werden verringert. Ferner verringert sich eine Dispersion des Signals und eine daraus resultierende Verbreiterung des Signals. Die Bandbreite kann im Bereich von 10 kHz bis 30 kHz eingestellt werden, z.B. auf 20 kHz.

Das Empfangsfilter 4 kann aus zwei diskreten Filterstufen bestehen, zwischen denen umgeschaltet werden kann. Alternativ besteht das Empfangsfilter 4 aus einem digitalen Filter, dessen Taps im Betrieb umgestellt werden.

Das Umschalten zwischen einer ersten Bandbreite für Messungen im Nahbereich und einer zweiten Bandbreite für Messungen im Fembereich kann durch einen Zeitgeber 5 erfolgen. Das Verfahren wird als Flussdiagramm in Fig. 2 dargestellt.

Erfindungsgemäß wird vor einem Aussenden eines Ultraschallpulses die Bandbreite des Empfangsfilters auf eine große Bandbreite eingestellt (S1). Die Empfangsstufe ist somit eingerichtet, reflektierte Signale aus der nahen Umgebung auszuwerten. Die Sendeeinrichtung 2 sendet danach einen Ultraschallpuls aus (S2). Mit dem Aussenden des Ultraschallpulses wird der Zeitgeber 5 zurückgesetzt oder gestartet (S3). Der Zeitgeber 5 sendet nach einer vorbestimmten Dauer ein Triggersignal 6 an den Empfangsfilter 4 (S4). Der Empfangsfilter 4 schaltet darauf auf eine kleinere Bandbreite um (S5).

Innerhalb der vorbestimmten Dauer ist somit der Ultraschallsensor für den Nahbetrieb und danach für den Fembetrieb eingerichtet. Die vorbestimmte Dauer legt fest, von wie weit entfernten Objekten die Signale noch mit der ersten Einstellung des Bandpasses empfangen werden. Bei einer beispielhaften Dauer von 6 ms werden unter der Annahme einer Schallgeschwindigkeit von 340 m/s Reflektionen aller Objekte innerhalb eines Radius von 1 m mit einer geringen Frequenzfilterung und geringen Verzerrung der Signale erfasst. Für weiter entfernte Objekte wird zugunsten eines verbesserten Störabstandes gegenüber Störem außerhalb des Signalnutzbandes eine Verzerrung der Signale akzeptiert. Diese akzeptierte Verzerrung hat geringe Auswirkung auf die radiale Trennschärfe, also die Unterscheidbarkeit von Zielreflektionen. Eine radiale Trennschärfe beschreibt den radialen Mindestabstand, den zwei Reflektionen gleichen Maximalpegels aufweisen müssen, damit der Pegel zwischen den Maxima der Reflektionen um mindestens 50% des Maximalpegels abfällt.

Eine weitere Ausgestaltung sieht vor, mehr als zwei unterschiedliche Einstellungen des Empfangsfilters zu verwenden. Die Bandbreite des Empfangsfilters kann beispielsweise kontinuierlich ab dem Zeitpunkt des Aussendens eines Ultraschallpulses verringert werden.

Eine weitere Ausgestaltung sieht vor, für die Erfassung weit entfernter Objekte die Pulsdauer eines Ultraschallpulses zu erhöhen. Parallel wird dazu die Bandbreite des Empfangsfilters 4 reduziert. Beispielsweise kann die Pulsdauer auf 1 ms erhöht und die Bandbreite auf 3 kHz verringert werden.

## Patentansprüche

1. Ultraschallsensor (1) für eine Einparkhilfe mit einem umschaltbaren Empfangsfilter, der für einen Nahmessbereich des Ultraschallsensors eine erste Bandbreite und für einen Fernmessbereich des Ultraschallsensors (1) eine zweite Bandbreite aufweist, wobei die erste Bandbreite größer als die zweite Bandbreite ist, **dadurch gekennzeichnet, dass** ein Zeitgeber (5) vorgesehen ist, mittels dem der Empfangsfilter (4) auf die erste Bandbreite vor dem Aussenden eines Ultraschallpulses umgeschaltet wird, ein Ultraschallpuls ausgesendet wird und dass nach einer vorbestimmten Zeitspanne nach dem Aussenden des Ultraschallpulses der Empfangsfilter (4) auf die zweite Bandbreite umgeschaltet wird.

2. Ultraschallsensor (1) nach Anspruch 1, wobei der Empfangsfilter (4) ein Bandpassfilter ist.

3. Ultraschallsensor (1) nach einem der vorhergehenden Ansprüche, wobei die erste Bandbreite 20 kHz und die zweite Bandbreite 8 kHz beträgt.

4. Verfahren zum Betreiben eines Ultraschallsensors in einer Einparkhilfe mit den Schritten:
Umschalten eines Empfangsfilters auf eine erste Bandbreite zum Erfassen von reflektierten Ultraschallsignalen an nahen Objekten und
Umschalten des Empfangsfilters auf eine zweite Bandbreite zum Erfassen von reflektierten Ultraschallsignalen an entfernten Objekten, wobei die erste Bandbreite größer als die zweite Bandbreite ist, **dadurch gekennzeichnet,**
**dass** der Empfangsfilter (4) durch einer Zeitgeber (5) auf die erste Bandbreite vor dem Aussenden eines Ultraschallpulses umgeschaltet wird, der Ultraschallpuls ausgesendet wird und nach einer vorbestimmten Zeitspanne nach dem Aussenden des Ultraschallpulses der Empfangsfilter (4) auf die zweite Bandbreite umgeschaltet wird.

5. Verfahren nach Anspruch 5, wobei zum Erfassen von reflektierten Ultraschallsignalen an nahen Objekten ein Ultraschallpuls erster Dauer ausgesendet wird und zum Erfassen von reflektierten Ultraschallsignalen an fernen Objekten ein Ultraschallpuls zweiter Dauer ausgesendet wird, wobei die erste Dauer kürzer als die zweite Dauer ist.

## Claims

1. Ultrasonic sensor (1) for a parking aid, having a switchable receiving filter which has a first bandwidth for a local measuring range of the ultrasonic sensor and a second bandwidth for a remote measuring range of the ultrasonic sensor (1), the first bandwidth being greater than the second bandwidth, **characterized in that** a timer (5) is provided and is used to switch the receiving filter (4) to the first bandwidth before the emission of an ultrasonic pulse, an ultrasonic pulse is emitted, and the receiving filter (4) is switched to the second bandwidth after a predetermined period after the emission of the ultrasonic pulse.

2. Ultrasonic sensor (1) according to Claim 1, the receiving filter (4) being a bandpass filter.

3. Ultrasonic sensor (1) according to one of the preceding claims, the first bandwidth being 20 kHz and the second bandwidth being 8 kHz.

4. Method for operating an ultrasonic sensor in a parking aid, having the steps of:
switching a receiving filter to a first bandwidth in order to detect ultrasonic signals reflected at local objects, and
switching the receiving filter to a second bandwidth in order to detect ultrasonic signals reflected at remote objects, the first bandwidth being greater than the second bandwidth,
**characterized in that** the receiving filter (4) is switched to the first bandwidth by a timer (5) before the emission of an ultrasonic pulse, the ultrasonic pulse is emitted, and the receiving filter (4) is switched to the second bandwidth after a predetermined period after the emission of the ultrasonic pulse.

5. Method according to Claim 4, an ultrasonic pulse of a first duration being emitted in order to detect ultrasonic signals reflected at local objects, and an ultrasonic pulse of a second duration being emitted in order to detect ultrasonic signals reflected at remote objects, the first duration being shorter than the second duration.

## Revendications

1. Capteur à ultrasons (1) pour une aide au stationnement comportant un filtre de réception commutable présentant une première largeur de bande pour une zone de mesure proche du capteur à ultrasons et une seconde largeur de bande pour une zone de mesure distante du capteur à ultrasons (1), la première largeur de bande étant supérieure à la seconde largeur de bande, **caractérisé en ce qu'**il est prévu un temporisateur (5) au moyen duquel le filtre de réception (4) est commuté sur la première largeur de bande avant l'émission d'une impulsion ultrasonore, une impulsion ultrasonore est émise, et **en ce que**, après une période de temps prédéterminée faisant suite à l'émission de l'impulsion ultrasonore, le filtre de réception (4) est commuté sur la seconde largeur de bande.

2. Capteur à ultrasons (1) selon la revendication 1, dans lequel le filtre de réception (4) est un filtre passe-bande.

3. Capteur à ultrasons (1) selon l'une quelconque des revendications précédentes, dans lequel la première largeur de bande est de 20 kHz et la seconde largeur de bande est de 8 kHz.

4. Procédé de mise en fonctionnement d'un capteur à ultrasons dans une aide au stationnement, comportant les étapes suivantes :
commuter un filtre de réception sur une première largeur de bande pour détecter des signaux ultrasonores réfléchis sur des objets proches et
commuter le filtre de réception sur une seconde largeur de bande pour détecter des signaux ultrasonores réfléchis sur des objets distants, la première largeur de bande étant supérieure à la seconde largeur de bande, **caractérisé en ce que**, au moyen d'un temporisateur (5), le filtre de réception (4) est commuté sur la première largeur de bande avant l'émission d'une impulsion ultrasonore, l'impulsion ultrasonore est émise et, après une période de temps prédéterminée faisant suite à l'émission de l'impulsion ultrasonore, le filtre de réception (4) est commuté sur la seconde largeur de bande.

5. Procédé selon la revendication 4, dans lequel, pour détecter des signaux ultrasonores réfléchis sur des objets proches, une impulsion ultrasonore d'une première durée est émise et pour détecter des signaux ultrasonores réfléchis sur des objets distants, une impulsion ultrasonore d'une seconde durée est émise, la première durée étant inférieure à la seconde durée.
